Europäisches Patentamt

European Patent Office

Office européen des brevets

(11) Veröffentlichungsnummer: **0 401 553 A2**

## EUROPÄISCHE PATENTANMELDUNG

(21) Anmeldenummer: **90109084.5**

(22) Anmeldetag: **15.05.90**

(51) Int. Cl.⁵: **G06F 1/00**

(30) Priorität: **03.06.89 DE 3918204**

(43) Veröffentlichungstag der Anmeldung:
**12.12.90 Patentblatt 90/50**

(84) Benannte Vertragsstaaten:
**DE FR GB IT**

(71) Anmelder: **AEG Olympia Office GmbH**
**Postfach 960**
**D-2940 Wilhelmshaven(DE)**

(72) Erfinder: **Zeising, Norbert**
**Jenaer Strasse 4**
**D-2900 Oldenburg(DE)**
Erfinder: **Behrens, Herbert**
**August-Hinrichs-Strasse 10**
**D-2932 Neuenburg(DE)**

(54) **Verfahren zum Wegblenden einer Anzeige auf einer Anzeigevorrichtung einer elektronischen Datenverarbeitungsanlage.**

(57) Bei Bearbeitung von vertraulichen Informationen an Anzeigevorrichtungen ist es erforderlich, daß diese vertraulichen Informationen kurzfristig unsichtbar auf der Anzeigevorrichtung gemacht werden müssen, wenn für diese Informationen unberechtigte Personen an den Arbeitsplatz gelangen. Dieses wird erfindungsgemäß dadurch erzielt, daß die Anzeige auf der Anzeigevorrichtung durch eine Eingabevorrichtung weg- und durch an eine Steuereinheit gegebene Steuerimpulse wieder eingeblendet wird. Zu diesem Zweck kann die Tastatur eine Wegblendtaste aufweisen, durch deren erste Betätigung die Anzeige weg- und durch eine zweite Betätigung wieder eingeblendet werden kann. Die die vertrauliche Information auf der Anzeigevorrichtung bearbeitende Person kann also durch eine einfache Betätigung der Wegblendtaste die Anzeige auf der Anzeigevorrichtung kurzfristig unsichtbar machen.

Die Erfindung betrifft ein Verfahren zum Wegblenden einer Anzeige auf einer Anzeigevorrichtung, z. B. auf einem Bildschirm einer elektronischen Datenverarbeitungsanlage der im Oberbegriff des Patentanspruchs 1 angegebenen Art.

Bei üblichen Informationsgeräten, z. B. bei Wortprozessoren, kann in allen Fällen, in denen die Information auf einem Anzeigegerät angezeigt werden kann, diese Information auch durch praktisch jede beliebige Person gedruckt und nach außen weitergegeben werden, so daß eine Geheimhaltung dieser Information praktisch nicht möglich ist.

Allerdings gibt es auch wichtige gespeicherte Informationen, die unbedingt geheim gehalten werden müssen und für eine Anzeige oder zum Ausdrucken nur zugelassen werden, wenn ein richtiges Paßwort eingegeben wurde. Wenn solche vertraulichen Informationen an einem Bildschirm bearbeitet werden, dann müssen diese z. B. durch ein Blatt Papier abgedeckt werden, wenn jemand an den Arbeitsplatz tritt, der diese Informationen nicht sehen darf.

Der Erfindung liegt nun die Aufgabe zugrunde, ein Verfahren und eine Anordnung für eine elektronische Datenverarbeitungsanlage mit einer Anzeigevorrichtung zu schaffen, durch die die auf der Anzeigevorrichtung zu bearbeitenden vertraulichen Informationen kurzfristig weggeblendet werden können, derart, daß plötzlich an den Arbeitsplatz tretende unberechtigte Personen keine Kenntnis von dem Inhalt der Anzeige erhalten können. Diese Aufgabe wird durch die im Patentanspruch 1 angegebene Erfindung gelöst.

Vorteilhafte Weiterbildungen sind in den Unteransprüchen definiert.

Im folgenden werden Ausführungsbeispiele der Erfindung anhand des in der Figur dargestellten Blockschaltbildes näher erläutert.

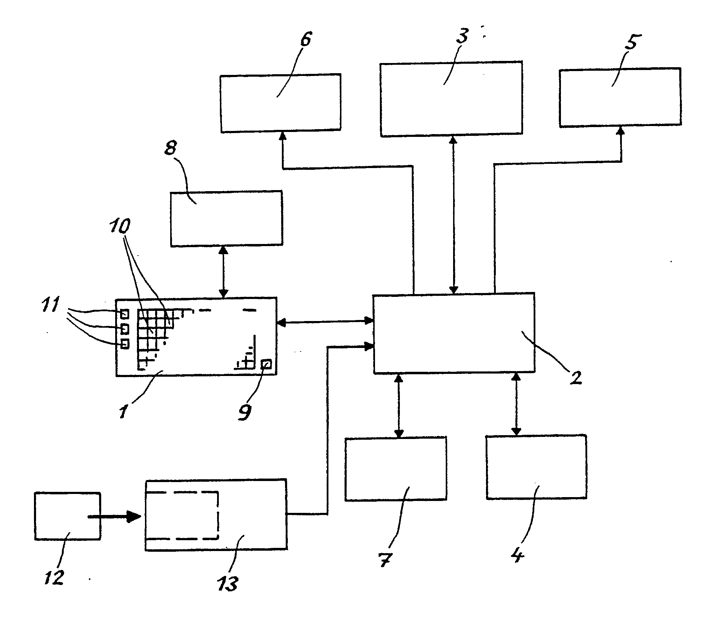

Die Figur 1 zeigt eine elektronische Datenverarbeitungsanlage mit einer Tastatur 1 mit Schreibtasten 10 und Funktionstasten 11, bei deren Betätigungen Codesignale an eine Steuereinheit 2, die aus einem zentralen Rechner besteht, gegeben werden. Diese Steuereinheit 2 steht mit einem Datenspeicher 3, einem Arbeitsspeicher 4 zur Ablage der über die Tastatur 1 eingegebenen Daten, einer Anzeigevorrichtung 5 und einer Druckvorrichtung 6 zum Anzeigen und Ausdrucken der Daten. Die Anzeigevorrichtung 5 kann aus einem Bildschirm oder einem sonstigen Display bestehen. Mit 7 ist ein Zeitschalter bezeichnet, der unter der Steuerung durch die Steuereinheit 2 dieser den Ablauf einer vorbestimmten Zeitdauer meldet. In dem Datenspeicher 3 sind neben Text- und Bilddaten auch ein Paßwort gespeichert, welches dieses mit einem über die Tastatur 1 eingegebenen Paßwort auf Identität prüft.

Die Tastatur 1 weist neben den Schreib- und den Funktionstasten 11 noch eine Wegblendtaste 9 auf, durch deren Betätigung die Anzeige auf der Anzeigevorrichtung 5 kurzfristig weggeblendet wird. Hierbei kann auch eine Tastensperre 8 aktiviert werden, die nur während des Wegblendens der Anzeige wirksam wird.

Bei Betätigung der Tasten 10, 11 der Tastatur 1 werden Codesignale an die Steuereinheit 2 gegeben, die dann durch Berechnungen und Abfragen des Datenspeichers entsprechende Daten in den Arbeitsspeicher 4 ablegt und auf der Anzeige der Anzeigevorrichtung 5 zur Bearbeitungs darstellt und zu einem späteren Zeitpunkt ein Ausdrucken der überarbeiteten Daten durch die Druckvorrichtung 6 auslöst.

Bei Bearbeitung von vertraulichen Informationen auf der Anzeige der Anzeigevorrichtung 5 ist es nun erforderlich, daß die Anzeige weggeblendet werden muß, wenn eine für vertrauliche Informationen tationen unberechtigte Person an den Arbeitsplatz tritt. Dieses wird erfindungsgemäß kurzfristig dadurch erzielt, daß die Anzeige auf der Anzeigevorrichtung 5 durch eine Eingabevorrichtung weg- und durch an der Steuereinheit 2 gegebene Steuersignale wieder eingeblendet wird. Die Einblendung der vertraulichen Information braucht nur dann zu erfolgen, wenn die für vertrauliche Informationen unberechtigte Person den Arbeitsplatz wieder verlassen hat.

Die Eingabevorrichtung kann die Tastatur 1 sein, wobei zum Wegblenden der Anzeige auf der Anzeigevorrichtung 5 ein oder mehrere Tasten 10, 11 betätigt werden. Die Tastatur 1 kann auch eine gesonderte Funktionstaste als Wegblendtaste 9 aufweisen, durch deren Betätigung die Anzeige ebenfalls kurzfristig wegblendbar ist. Diese Wegblendtaste 9 kann derart ausgebildet sein, daß durch deren erste Betätigung die Anzeige auf der Anzeigevorrichtung 5 weggeblendet und durch eine nochmalige zweite Betätigung wieder eingeblendet wird. Die zweite Betätigung wird selbstverständlich erst dann vorgenommen, wenn die für vertrauliche Informationen unberechtigte Person den Arbeitsplatz wieder verlassen hat. Beim Wegblenden der Anzeige auf der Anzeigevorrichtung bleiben die Daten für die vertrauliche Dokumentation in dem Arbeitsspeicher 4 unverändert enthalten.

Das Wiedereinblenden der Anzeige auf der Anzeigevorrichtung 5 kann dadurch noch erschwert werden, daß zu der zweiten Betätigung der Wegblendtaste 9 noch die Eingabe eines Paßwortes erforderlich wird. Die Steuereinheit 2 überprüft hierbei die Identität des eingegebenen Paßwortes mit dem in dem Datenspeicher 3 enthaltenen Paßwort. Nur bei Identität der beiden Paßwörter ist eine Wiedereinblendung der Anzeige auf der Anzeigevorrichtung 5 möglich.

Eine weitere Möglichkeit zur Wiedereinblendung der Anzeige auf der Anzeigevorrichtung 5 besteht darin, daß durch die Betätigung der Wegblendtaste 9 ein Zeitschalter 7 aktiviert wird, der den Ablauf einer vorbestimmten Zeitdauer der Steuereinheit 2 meldet, wodurch diese Steuereinheit 2 die Wiedereinblendung der Anzeige auf der Anzeigevorrichtung 5 auslöst. Der Zeitschalter 7 kann so ausgebildet sein, daß seine Aktivierung nur ausgelöst wird, wenn die auf der Anzeige der Anzeigevorrichtung 5 zu bearbeitenden Informationen als vertraulich klassifiziert worden ist.

Im Rahmen der Erfindung kann die Eingabevorrichtung auch eine Karte 12 sein, auf der ein spezifisches Paßwort aufgezeichnet ist und die durch einen Kartenleser 13 lesbar ist. Dieser Kartenleser 13 gibt dann entsprechende Steuerimpulse an die Steuereinheit 2, der wiederum ein Vergleich der Paßworte vornimmt. Die Tastatur 1 kann übrigens auch im weggeblendeten Zustand der Anzeige auf der Anzeigevorrichtung 5 durch eine Tastensperre 8 gesperrt werden. Ebenso ist es möglich, daß die Anzeige auf der Anzeigevorrichtung 5 in weggeblendetem Zustand durch eine Dummy-Information ersetzt wird.

Die Erfindung ist nicht nur einsetzbar bei Wortprozessoren und Bilddateien, sondern gleichermaßen bei Terminal-Arbeitsplätzen, einem Personal-Computer und dergleichen.

Im Rahmen der Erfindung kann das Wegblenden der Anzeige auf der Anzeigevorrichtung auch durch Sensoren erfolgen, die hinter der Anzeige den Raum überwachen und bei Eintritt einer Person in diesen Raum einen Schaltimpuls zum Wegblenden der Anzeige auslösen. Das Wiedereinblenden der geheimen Information kann auch mittels einer Personenrufanlage oder über einen Telefonadapter einer bestimmten Person erfolgen.

**Ansprüche**

1. Verfahren zum Wegblenden einer Anzeige auf einer Anzeigevorrichtung, z. B. auf einem Bildschirm einer elektronischen Datenverarbeitungsanlage oder sonstigen Büromaschine ähnlicher Bauart, bei der mittels einer als Rechner ausgebildeten Steuereinheit durch eine Tastatur eingegebene Daten in einem Arbeitsspeicher abgelegt und auf der Anzeigevorrichtung zum Bearbeiten dargestellt werden und zu einem späteren Zeitpunkt ein Ausdrukken der Daten durch eine Druckvorrichtung erfolgt, **dadurch gekennzeichnet,** daß die Anzeige auf der Anzeigevorrichtung (5) durch eine Eingabevorrichtung weg- und durch an die Steuereinheit (2) gegebene Steuerimpulse wieder eingeblendet wird.

2. Verfahren nach Anspruch 1, **dadurch gekennzeichnet,** daß die Eingabevorrichtung die Tastatur (1) ist, wobei zum Wegblenden der Anzeige auf der Anzeigevorrichtung (5) ein oder mehrere Tasten (10, 11) betätigt werden.

3. Verfahren nach Anspruch 2, **dadurch gekennzeichnet,** daß die Tastatur (1) eine Wegblendtaste (9) für die Anzeige auf der Anzeigevorrichtung (5) aufweist.

4. Verfahren nach Anspruch 3, **dadurch gekennzeichnet,** daß die Anzeige auf der Anzeigevorrichtung (5) durch eine erste Betätigung der Wegblendtaste (9) weg- und durch eine zweite Betätigung wieder eingeblendet wird.

5. Verfahren nach Anspruch 4, **dadurch gekennzeichnt,** daß zum Wiedereinblenden der Anzeige auf der Anzeigevorrichtung (5) zusätzlich die Eingabe eines Paßwortes erforderlich ist.

6. Verfahren nach Anspruch 3, **dadurch gekennzeichnet,** daß durch die Betätigung der Wegblendtaste (9) ein Zeitschalter (7) aktiviert wird, durch den die Anzeige auf der Anzeigevorrichtung (5) wieder automatisch eingeblendet wird.

7. Verfahren nach Anspruch 6, **dadurch gekennzeichnet,** daß der Zeitschalter (7) nur aktiviert wird, wenn die auf der Anzeigevorrichtung (5) zu bearbeitende Information als vertraulich klassifiziert ist.

8. Verfahren nach Anspruch 1 oder 2, **dadurch gekennzeichnet,** daß zum Wiedereinblenden der Anzeige auf der Anzeigevorrichtung (5) ein Paßwort erforderlich ist, das dadurch eingegeben wird, daß ein oder mehrere Tasten (10, 11) der Tastatur (1) betätigt werden.

9. Verfahren nach Anspruch 1, **dadurch gekennzeichnet,** daß die Eingabevorrichtung eine Karte (12), auf der ein spezifisches Paßwort aufgezeichnet ist, und einen Kartenleser (13) zum Lesen des Paßwortes enthält.

10. Verfahren nach einem der vorhergehenden Ansprüche, **dadurch gekennzeichnet,** daß die Tastatur (1) im weggeblendeten Zustand der Anzeige auf der Anzeigevorrichtung (5) durch eine Tastensperre (8) gesperrt wird.

11. Verfahren nach einem der vorhergehenden Ansprüche, **dadurch gekennzeichnet,** daß die Anzeige auf der Anzeigevorrichtung (5) im weggeblendeten durch eine Dummy-Information ersetzt wird.

12. Verfahren nach Anspruch 1, **dadurch gekennzeichnet,** daß die Eingabevorrichtung aus Sensoren besteht, welche den Raum hinter der Anzeige überwachen und durch welche z. B. bei Eintritt von Personen in diesen Raum die Anzeige auf der Anzeigevorrichtung wegblendbar ist.

PS 2128